# FASCICULE DE BREVET EUROPEEN

(11) **EP 4 396 073 B1**
(45) Date de publication et mention de la délivrance du brevet: **27.05.2026**
(21) Numéro de dépôt: 22744491.6
(22) Date de dépôt: 22.07.2022
(51) Int. Cl.: B62M 6/90, B62J 43/13, B62J 43/23, B62J 43/28, B62K 19/40, B60K 1/04, B60L 50/64, H01M 50/249, H01M 50/244, H01M 50/262

(54) **VÉHICULE ÉLECTRIQUE COMPORTANT UN LOGEMENT POUR BATTERIE, ET PROCÉDÉ DE MONTAGE**
ELEKTROFAHRZEUG MIT HOHLRAUM FÜR EINE BATTERIE UND MONTAGEVERFAHREN
ELECTRIC VEHICLE COMPRISING A CAVITY FOR A BATTERY, AND ASSEMBLY METHOD

(30) Priorité: 01.09.2021 FR 2109144
(43) Date de publication de la demande: 10.07.2024
(73) Titulaire: Decathlon, 59650 Villeneuve d'Ascq (FR)
(72) Inventeur: PETITDEMANGE, David, 59650 VILLENEUVE D'ASCQ (FR)
(74) Mandataire: Cabinet Beau de Loménie
(86) Numéro de dépôt international: PCT/EP2022/070586
(87) Numéro de publication internationale: WO 2023/030753

(56) Documents cités:
- TW-U- M 547 523
- US-A1- 2019 337 588

## Description

### Domaine Technique

La présente invention concerne le domaine des véhicules électriques, et notamment le domaine des vélos électriques. L'invention concerne plus spécifiquement les vélos électriques comportant un logement pour accueillir une batterie.

### Technique antérieure

Il est connu de concevoir des véhicules entraînés par un moteur électrique. Ainsi, il existe depuis de nombreuses années des vélos comportant un moteur électrique et une batterie, afin de pouvoir fournir à l'utilisateur une aide motrice permettant, notamment, de diminuer l'effort à produire pour l'utilisateur.

Les moyens d'entraînement électriques sont ainsi de plus en plus répandus, et il existe dorénavant une volonté d'intégration de tels moyens d'entraînement électriques dans le cadre du vélo, à des fins esthétiques mais également de protection contre les intempéries voire contre les vols.

Il existe ainsi des moyens d'intégration de la batterie dans un des tubes du cadre du vélo, notamment dans le tube diagonal. De tels cadres sont notamment décrits dans le document US 2019/337588. Le but des moyens d'intégration sont notamment de permettre le positionnement de la batterie à l'intérieur du cadre de vélo, lors de l'utilisation du vélo, tout en permettant également un retrait rapide et facile de la batterie hors du cadre pour permettre sa recharge.

En particulier, le cadre de vélo comporte classiquement une portion formant un logement intérieur et présentant une ouverture permettant d'insérer ou d'extraire une batterie dans le logement intérieur. La batterie comporte également un capot destiné à venir fermer, lorsque la batterie est montée dans le logement, l'ouverture du cadre, à des fins esthétiques et de protection.

Cependant, il est délicat d'obtenir un alignement correct entre le capot et l'ouverture du cadre. En effet, le capot étant monté sur le boitier de batterie, par exemple par des glissières, c'est bien la position du boitier de batterie qui va définir la position du capot.

Or, les batteries sont, de manière standard, maintenues en place par rapport au cadre par des moyens de support longitudinaux solidaires du cadre et assurant également des fonctions de contact électriques et/ou de verrouillage.

L'intégration des batteries dans les cadres de vélo nécessite ainsi soit des moyens de support pouvant être réglés en position, soit des composants, à la fois pour les moyens de support et pour le boitier de batterie, présentant des dimensions dont les tolérances sont très faibles, afin de permettre un positionnement correct du capot par rapport au cadre.

Cependant, la diminution des tolérances conduit généralement à une augmentation du prix du composant.

Par ailleurs, le réglage du positionnement des moyens de support s'effectue généralement par itérations, c'est-à-dire nécessite généralement des insertions et retraits successifs de la batterie dans et hors du logement, ce qui augmente la durée de fabrication du vélo.

Le document TW M 547 523 U concerne le cadre d'un vélo électrique comportant une batterie intégrée avec capot. Ledit document divulgue un vélo électrique selon le préambule de la revendication 1.

### Exposé de l'invention

La présente invention vise à résoudre les différents problèmes techniques énoncés précédemment. En particulier, la présente invention vise à proposer un véhicule électrique, à savoir un vélo électrique, comportant une batterie intégrée de manière esthétique tout en restant facile à extraire du véhicule. Plus précisément, la présente invention vise à proposer un véhicule électrique, à savoir un vélo électrique, dans lequel l'intégration de la batterie peut être effectuée à la fois de manière simple et esthétique, tout en restant peu onéreux.

Ainsi, selon un aspect de l'invention, il est proposé un vélo électrique comportant :
- un logement creux, par exemple un cadre creux, avec une ouverture d'insertion d'une batterie,
- une batterie comportant un boitier s'étendant selon une direction longitudinale, entre deux extrémités longitudinales, et, le long d'un côté longitudinal du boitier, un capot, par exemple de dimensions inférieures aux dimensions de l'ouverture d'insertion, et
- un support de batterie monté à l'intérieur du logement creux, de manière à permettre l'installation ou le retrait de la batterie sur le support, à travers l'ouverture d'insertion, le support comportant deux parties configurées pour coopérer avec les deux extrémités longitudinales du boitier de la batterie.

Selon deux directions de l'espace, à savoir selon la direction longitudinale du boitier et selon une direction transversale à la direction longitudinale du boitier lorsque le boitier est positionné dans le logement creux, les deux parties de support sont montées de manière fixe, non-réglable, par rapport au logement creux, et le capot est monté de manière réglable sur le boitier de batterie.

Ainsi, selon la présente invention, le positionnement du capot n'est plus déterminé par le positionnement du boitier de batterie, mais peut au contraire être effectué par rapport au boitier de batterie. La batterie peut donc venir se positionner avec des tolérances standards dans le logement du véhicule, sans requérir un placement particulièrement fin : le capot est positionné uniquement dans un second temps, lorsque la batterie est positionnée dans le logement. Il n'est alors plus nécessaire de prévoir un ajustement des moyens de support de la batterie, ou bien des composés à faibles tolérances dimensionnelles, pour pouvoir obtenir le positionnement voulu et l'effet esthétique recherché sur le véhicule final avec batterie intégrée.

En particulier, la présente invention prévoit un réglage du capot sur le boitier de batterie, selon deux directions dans lesquelles les moyens de support de la batterie ne sont pas prévus pour se régler par rapport au logement d'accueil de la batterie. On facilite donc les moyens et le temps à mettre en œuvre pour obtenir le positionnement voulu du capot par rapport au logement selon lesdites deux directions. Le réglage du capot sur le boitier peut ainsi se faire selon la direction longitudinale du boitier et selon une direction transversale à la direction longitudinale du boitier lorsque le boitier est monté dans le logement creux.

Un tel mode de réalisation est particulièrement avantageux notamment, mais pas uniquement, lorsque le capot s'étend sensiblement dans un plan : dans ce cas, les deux directions de l'espace, selon lesquelles le capot est monté de manière réglable sur le boitier de batterie sont les deux directions définissant le plan dans lequel s'étend sensiblement le capot. On peut alors aisément et précisément positionner le capot par rapport à l'ouverture du logement, et plus particulièrement chacun des bords du capot par rapport à l'ouverture du logement.

Préférentiellement, les deux parties de support sont montées sur une surface sensiblement plane du logement creux. Selon la direction perpendiculaire à ladite surface du logement creux, les deux parties de support sont montées de manière fixe, non-réglable, par rapport au logement creux, et le capot est monté de manière réglable sur le boitier de batterie.

Dans un tel mode de réalisation, la position des parties de support peut être ajustée dans le plan, ou au moins selon une direction dudit plan, de la surface du logement creux lors du montage, c'est-à-dire lors de la fixation, desdites parties de support sur ladite surface du logement creux. Toutefois, la position des parties de support ne peut pas être ajustée selon la direction perpendiculaire au plan de ladite surface du logement creux lors du montage des parties de support sur ladite surface. Le capot est alors monté sur le boitier de manière réglable selon ladite direction perpendiculaire au plan de ladite surface du logement creux sur laquelle lesdites parties de support sont montées.

Dans le cas d'un capot plan, la surface du logement creux sur laquelle sont montées les première et deuxième parties de support, est alors perpendiculaire au plan du capot.

Préférentiellement, les deux parties du support et/ou le boitier de batterie sont configurés pour exercer une contrainte longitudinale de serrage entre le boitier de batterie et le support, de préférence au niveau, ou à proximité ou près, de la fixation d'au moins une des deux parties du support sur l'intérieur du logement creux.

Afin de limiter le déplacement de la batterie dans le logement, ce qui pourrait engendrer des bruits désagréables pour l'utilisateur, voire créer des dommages au niveau des connexions mécaniques et/ou électriques entre le boitier de batterie et les parties de support, il est prévu d'exercer une contrainte longitudinale de serrage entre le boitier et le support. La contrainte longitudinale est avantageusement exercée à proximité des fixations des parties de support sur le logement creux, de manière à ce que la contrainte longitudinale soit directement transmise aux moyens de fixation et donc au logement creux. On améliore ainsi la tenue de la batterie dans le logement. On limite également les contraintes de torsion pouvant s'exercer au niveau des parties de support, ce qui permet de prévoir des supports en matériau moins rigides, et donc moins chers et moins lourds.

Préférentiellement, la batterie comporte des moyens de fixation du capot sur le boitier, lesdits moyens de fixation comportant un système de serrage, par exemple un ensemble vis-écrou, monté avec du jeu dans une ouverture du boitier, par exemple une ouverture oblongue dont les dimensions sont inférieures à celles de l'écrou mais supérieures à celles de la vis.

Afin de permettre le réglage du positionnement du capot par rapport au boitier de batterie, le capot peut être monté sur ledit boitier via un système de serrage. En particulier, les moyens de fixation du capot sur le boitier sont configurés pour permettre un jeu du capot par rapport au boitier, selon lesdites deux directions :
dit autrement, les moyens de fixation permettent, avant serrage, de déplacer le capot par rapport au boitier selon lesdites deux directions.

Une fois le capot correctement positionné selon lesdites deux directions, il suffit alors d'utiliser le système de serrage des moyens de fixation pour figer la position voulue du capot par rapport au boitier de batterie.

Ainsi, les moyens de fixation peuvent comprendre un ensemble vis-écrou, ou boulon, monté dans une ouverture du boitier et/ou du capot qui présente une superficie supérieure à la section transversale de la vis du boulon mais avec au moins une dimension inférieure à celle de l'écrou du boulon et de la tête de vis. Dans ce cas, le boitier et/ou le capot pourra se déplacer par rapport à la vis, lorsque le boulon ne sera pas serré. Par contre, une fois le boulon serré, le capot et le boitier seront alors figés en position l'un par rapport à l'autre.

L'utilisation de tels moyens de fixation du capot sur le boitier de batterie permet avantageusement de positionner et de serrer le capot sur le boitier sans avoir à introduire et extraire la batterie du logement à plusieurs reprises. Il suffit de placer une fois la batterie dans le logement, puis de positionner le capot comme souhaité par rapport à l'ouverture du logement, avant de venir serrer la fixation du capot. En effet, contrairement aux supports de la batterie dont les fixations sur le logement se situent à l'intérieur dudit logement, les moyens de fixation du capot sur la batterie sont accessibles depuis l'extérieur du logement, ce qui facilite leur utilisation.

Préférentiellement, une des parties du support comprend un moyen de serrage longitudinal, par exemple un patin monté, selon la direction longitudinale du boitier de batterie, sur un moyen élastique.

Afin de maintenir une pression longitudinale sur la batterie lorsque celle-ci est montée dans le logement, quelle que soit la tolérance observée sur les dimensions du boitier de batterie, au moins une partie du support comprend un moyen de serrage longitudinal permettant de compenser ladite tolérance sur les dimensions du boitier de batterie. Le moyen de serrage longitudinal est avantageusement un patin, c'est-à-dire un moyen d'appui avec une surface principale constituant une surface de contact, de préférence sensiblement plane, monté sur un moyen élastique, tel qu'une lame ressort ou un ou plusieurs ressorts hélicoïdaux. Le moyen élastique permet de déplacer le patin selon la direction longitudinale, jusqu'à ce que celui-ci vienne en contact, ou en appui, contre le boitier de batterie. Une fois le patin en contact avec le boitier, le moyen élastique permet d'obtenir une pression longitudinale entre le patin et le boitier, permettant de limiter les mouvements longitudinaux intempestifs du boitier dans le logement.

Préférentiellement, le capot est sensiblement plan et la position du capot peut être réglée par rapport au boitier selon les deux directions de l'espace du plan du capot, à savoir la direction longitudinale du boitier et une direction transversale à la direction longitudinale du boitier.

Selon un mode de réalisation, le capot peut présenter une forme générale sensiblement plane et être destiné à venir se positionner dans la continuité d'une surface sensiblement plane du cadre du véhicule. Dans ce cas, la position du capot peut être avantageusement réglée selon les deux directions de l'espace définissant le plan dans lequel s'étend le capot, afin de pouvoir ajuster le positionnement des différents bords du capot par rapport à l'ouverture d'insertion du logement. Dit autrement, il est alors possible et aisé de venir positionner le capot par rapport au logement de manière à ce que l'écart entre lui et le logement soit sensiblement le même sur tout le pourtour du capot.

Préférentiellement, le capot s'étend sensiblement dans un plan comportant la direction longitudinale du boitier et une direction transversale à la direction longitudinale du boitier. Selon ladite direction longitudinale et ladite direction transversale lorsque le boitier est positionné dans le logement creux, les deux parties de support sont montées de manière fixe, non-réglable, par rapport au logement creux, et le capot est monté de manière réglable sur le boitier de batterie.

Préférentiellement, au moins une des deux parties du support de batterie est fabriquée en plastique, de préférence en plastique injecté.

Comme indiqué précédemment, le vélo électrique selon la présente invention permet un positionnement fin et précis du capot par rapport au boitier, et donc au logement, même en cas de variation de tolérances sur les dimensions du boitier notamment. Il en est de même en cas de légères déformations d'une ou des parties du support sous l'effet du poids de la batterie ou sous l'effet de la pression longitudinale s'exerçant entre le boitier et les parties du support. Ainsi, une telle déformation pourra également être compensée par le positionnement adéquat du capot sur le boitier de batterie, de manière à garder un aspect esthétique et une fonction de protection souhaitée. Il n'est donc pas nécessaire de prévoir des parties de support présentant des rigidités élevées, pour s'affranchir d'éventuelles déformations, mais il est au contraire alors possible de fabriquer une ou les parties de support en plastique, notamment injecté, tout en permettant d'avoir toujours un positionnement correct du capot. De telles parties de support en plastique présentent notamment l'avantage d'avoir un poids plus faible que des parties similaires en métal par exemple, pour un coût bien plus faible également.

Selon un autre aspect de l'invention, il est également proposé un procédé de montage d'un support pour batterie et d'une batterie à l'intérieur d'un logement creux de vélo électrique avec une ouverture d'insertion. La batterie comporte un boitier s'étendant selon une direction longitudinale, entre deux extrémités longitudinales, et, le long d'un côté longitudinal du boitier, un capot, par exemple de dimensions inférieures aux dimensions de l'ouverture d'insertion. Le support de batterie comporte deux parties, de préférence en plastique, configurées pour coopérer avec les deux extrémités longitudinales du boitier de la batterie.

Selon le procédé, on fixe, de manière non-réglable selon deux directions de l'espace, à savoir selon la direction longitudinale du boitier et selon une direction transversale à la direction longitudinale du boitier lorsque le boitier est positionné dans le logement creux, les deux parties du support à l'intérieur du logement creux de vélo électrique ; on installe la batterie sur le support, à l'intérieur du logement creux de vélo électrique ; et on règle, selon lesdites deux directions de l'espace, la position du capot sur le boitier de batterie par rapport à l'ouverture d'insertion du logement creux, de préférence de manière centrée.

Comme on peut le constater, le réglage de la position du capot s'effectue lorsque la batterie est positionnée dans le logement. Il n'est donc pas nécessaire de ressortir la batterie de son logement pour effectuer le réglage : celui-ci s'effectue directement sur la batterie en position d'utilisation, ce qui permet un réglage plus fin et plus rapide.

Préférentiellement, le capot s'étend sensiblement dans un plan comportant la direction longitudinale du boitier et une direction transversale à la direction longitudinale du boitier et, selon ladite direction longitudinale et ladite direction transversale, on règle la position du capot sur le boitier de batterie par rapport à l'ouverture d'insertion du logement creux, de préférence de manière centrée.

Préférentiellement, lorsque la batterie est installée sur le support, on exerce une contrainte longitudinale entre les deux parties du support et la batterie, de préférence au niveau, ou à proximité ou près, de la fixation d'au moins une des deux parties du support sur l'intérieur du logement creux.

La contrainte longitudinale permet de maintenir le boitier de batterie en position par rapport au support, et donc de maintenir le capot en position par rapport à l'ouverture d'insertion, en utilisation. Il n'y a donc pas de risque de changement de position du capot par rapport à l'ouverture d'insertion, en raison d'un changement de position du boitier de batterie par rapport au support.

Préférentiellement, les deux parties du support sont fixées sur le logement creux à l'aide d'un gabarit.

Grâce au vélo électrique selon l'invention, il est possible d'obtenir un positionnement correct du capot par rapport au logement, malgré les contraintes pouvant s'exercer entre le boitier de batterie et le support, ou malgré les variations de dimensions du boitier. Dit autrement, le dispositif et le procédé selon la présente invention permettent d'absorber les variations de dimensions du boitier de batterie, tout en permettant au capot de rester correctement placé. Ainsi, le support de batterie peut être monté dans le logement de manière unique, en prévoyant toujours la même distance entre les deux parties du support, ce qui peut être effectué à l'aide d'un gabarit. Le montage des deux parties du support s'en trouve par conséquent d'autant plus facilité et rapide, puisqu'il n'est pas nécessaire d'anticiper ou d'ajuster en fonction d'une éventuelle tolérance au niveau de la dimension du boitier de batterie.

Le gabarit permet ainsi de fixer la distance entre les deux parties du support. Le gabarit peut également être configuré pour coopérer avec l'ouverture d'insertion. Dans ce cas, le gabarit permet de positionner les deux parties du support non seulement entre elles, mais également par rapport à l'ouverture d'insertion. Seul le positionnement des parties de support selon, par exemple, une direction perpendiculaire au plan du capot, peut alors rester nécessaire avant immobilisation définitive des parties du support dans le logement.

Préférentiellement, on règle la position du capot sur le boitier de batterie à l'aide d'un ensemble d'entretoises périphériques, de préférence en forme de V, venant se positionner, simultanément, entre les différents côtés du capot et l'ouverture d'insertion lorsqu'on règle la position du capot.

Afin de positionner rapidement et correctement le capot par rapport au logement, il est possible d'utiliser un outil de centrage configuré pour laisser un même espace entre les différents côtés du capot et les bords de l'ouverture d'insertion du logement. Par exemple, l'outil de centrage peut comporter plusieurs entretoises, de préférence au moins une par côté du capot, reliées entre elles par un corps pouvant former une poignée. Les entretoises sont destinées à venir se positionner toutes simultanément entre le capot et le bord de l'ouverture d'insertion. Par ailleurs, les entretoises présentent également avantageusement une forme en V, de manière à intercaler un même écart entre les côtés du capot et les bords de l'ouverture d'insertion, par simple translation de l'outil de centrage selon une direction perpendiculaire au capot.

### Brève description des dessins

[Fig. 1] La figure 1 représente une vue en perspective d'une portion de cadre de vélo électrique selon l'invention, avec un logement pour batterie ;
[Fig. 2] La figure 2 représente une vue en coupe de la portion de cadre de vélo électrique illustrée à la figure 1 ;
[Fig. 3] La figure 3 représente une deuxième partie de support pour batterie, destiné à maintenir une batterie dans le logement du cadre de vélo électrique ;
[Fig. 4] La figure 4 représente une première partie de support pour batterie, destiné à maintenir une batterie dans le logement du cadre de vélo électrique ;
[Fig. 5] La figure 5 représente une vue de côté d'une batterie pour cadre de vélo électrique ; et
[Fig. 6] La figure 6 représente un outil de positionnement d'un capot, lors de la fixation sur un boitier de batterie.

### Description des modes de réalisation

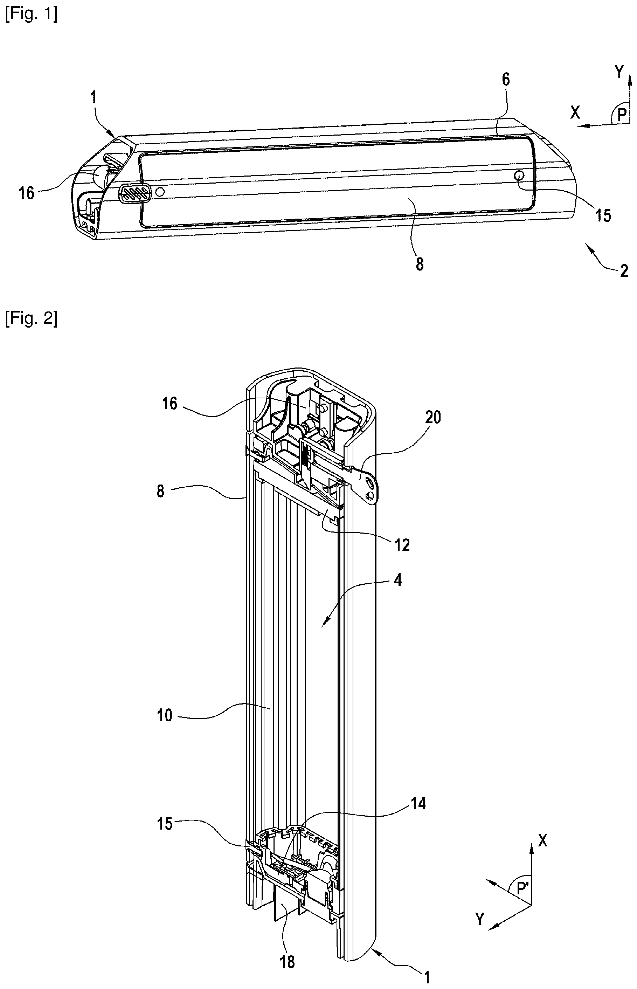

La figure 1 illustre schématiquement un logement creux 1 d'un véhicule électrique 2. Le logement creux 1 peut être formé, par exemple, par une portion de cadre du véhicule électrique 2. Ladite portion de cadre du véhicule électrique 2 peut notamment se présenter sous la forme d'un tube dont la paroi délimite un volume intérieur libre. Le véhicule électrique 2 peut notamment être un vélo, ou bien un cargo, un vélo mobile, etc.

Dans le cas d'un vélo électrique, le logement creux 1 peut être formé par exemple dans le tube diagonal ou bien dans le tube supérieur du cadre du vélo. Néanmoins, d'autres positions peuvent également être envisagées, notamment ailleurs que dans le cadre.

Le logement creux 1 comporte ainsi un volume intérieur libre destiné à accueillir une batterie amovible 4. Afin de permettre l'accès audit volume intérieur, le logement creux 1 comporte une ouverture d'insertion 6 permettant l'insertion et le retrait de la batterie 4 dans et hors du logement creux 1. Le logement creux 1 peut s'étendre selon une direction longitudinale X, en particulier lorsqu'il est formé par un tube de cadre. Dans ce cas, la batterie 4 peut avantageusement présenter également une forme longitudinale afin d'exploiter au mieux l'espace disponible dans le logement creux.

Dans l'exemple illustré sur les figures 1 et 2, l'ouverture d'insertion 6 est obtenue par une découpe réalisée dans le cadre du véhicule électrique 2, par exemple dans la paroi du tube formant le logement creux 1.

L'ouverture d'insertion 6 peut se trouver sur l'une quelconque des faces latérales du logement creux 1. Par exemple, dans le cas d'un logement creux 1 prévu dans le tube diagonal d'un vélo électrique, l'ouverture d'insertion 6 pourra se situer sur le face supérieure du tube diagonal, sur la face inférieure ou, préférentiellement, sur une face latérale du tube diagonal. Un tel positionnement de l'ouverture d'insertion 6 permet notamment d'enlever la batterie 4 du logement creux 1 sans être gêné par le tube supérieur, comme cela peut être le cas avec une ouverture d'insertion disposée sur la face supérieure du tube diagonal, et sans risquer de la faire tomber, comme cela peut être le cas avec une ouverture d'insertion disposée sur la face inférieure du tube diagonal.

Un tel mode de réalisation permet notamment d'exploiter le volume intérieur du tube pour pouvoir y ranger la batterie 4, de manière à réduire l'encombrement extérieur de la batterie 4. Un tel mode de réalisation permet également de protéger la batterie 4 lors de l'utilisation du véhicule électrique 2, puisqu'elle est entièrement intégrée à l'intérieur du logement creux 1 et donc protégée contre les intempéries ou les actes de vandalisme par exemple.

Afin de cacher l'ouverture d'insertion 6 lors de l'utilisation du véhicule électrique 2, il est classique de prévoir, sur la batterie 4, un capot 8 destiné à venir refermer l'ouverture d'insertion 6. Le capot 8 est ainsi préférentiellement prévu de manière similaire ou identique à la paroi du logement creux, afin de limiter l'impact visuel de l'ouverture d'insertion 6 et obtenir un aspect esthétique amélioré.

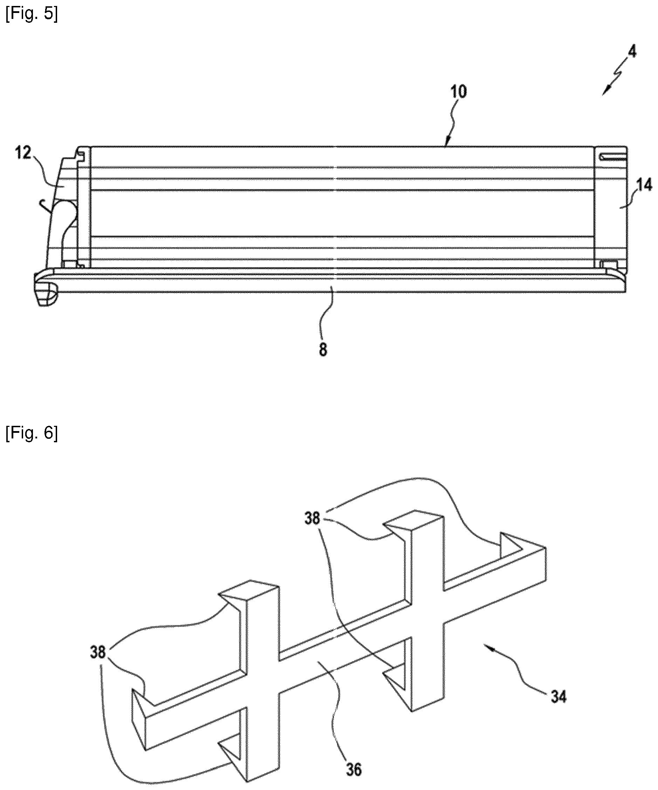

Comme illustré sur la figure 5, la batterie 4 comporte également, en plus du capot 8, un boitier 10 s'étendant selon la même direction longitudinale que la batterie 4 et dans lequel sont montées les cellules électro-chimiques notamment, et sur lequel est fixé le capot 8. Afin de permettre l'intégration de la batterie 4 dans le véhicule électrique 2, et notamment la connexion mécanique et la connexion électrique, le boitier 10 comporte des moyens de connexion avec le logement creux 1. Dans l'exemple illustré à la figure 2 où la batterie 4 présente une forme longitudinale, les moyens de connexion sont deux extrémités longitudinales destinées à coopérer avec le logement 1. Le boitier 10 comprend donc une première extrémité longitudinale 12 destinée à permettre une connexion mécanique du boitier 10 dans le logement creux 1, et une deuxième extrémité longitudinale 14 destinée à permettre une connexion mécanique et électrique du boitier 10 dans le logement creux 1.

Enfin, la batterie 4 comporte des moyens de fixation 15 du capot 8 sur le boitier 10. Le moyen de fixation 15 est notamment conçu pour permettre un ajustement de la position du capot 8 par rapport au boitier 10, et donc par rapport à l'ouverture d'insertion 6 du logement creux 1.

En effet, afin de permettre un bon positionnement du capot 8 par rapport à l'ouverture d'insertion 6, notamment à des fins esthétiques mais également d'étanchéité, il est connu de prévoir des supports de batterie dont le positionnement dans le logement creux peut être ajusté. Cependant, un tel ajustement nécessite, après avoir positionné la batterie dans ledit logement pour identifier les modifications à effectuer, un retrait de la batterie et un repositionnement des supports « en aveugle », avant de remettre la batterie dans le logement afin de vérifier que le positionnement obtenu est bien celui souhaité. Une telle méthode d'ajustement requiert donc du temps et reste malgré tout peu efficace.

Selon la présente invention, les moyens de fixation 15 du capot 8 sur le boitier 10 sont configurés pour permettre un ajustement du capot 8 sur le boitier 10, et avantageusement lorsque la batterie 4 est positionnée dans le logement creux 1. Il est alors possible de positionner directement et correctement le capot 8 dans sa position finale, avec la batterie 4 dans le logement creux 1.

A cet effet, le moyen de fixation 15 est configuré pour permettre un ajustement de la position du capot 8 sur le boitier 10, selon deux directions de l'espace. Dans le cas illustré à la figure 1, le capot 8 s'étend sensiblement dans un plan P (voir figure 1) et selon la même direction longitudinale X (voir figures 1 et 2) que celle du boitier 10, et le moyen de fixation 15 est configuré pour permettre un ajustement en position du capot 8 par rapport au boitier 10 selon les deux directions de l'espace du plan P dans lequel s'étend sensiblement le capot 8, à savoir la direction longitudinale X du capot 8 et une direction Y du plan du capot 8 transversale à la direction longitudinale X du capot 8.

Plus concrètement, le moyen de fixation 15 est configuré pour permettre au capot 8 d'être ajusté en position dans le plan P de la figure 1, à savoir selon la direction horizontale X et selon la direction verticale Y.

Selon un exemple de réalisation, le moyen de fixation 15 peut comprendre deux boulons formés, chacun, par une vis et un écrou, et deux trous agrandis, c'est-à-dire avec du jeu, formés soit au niveau du capot 8, soit, de préférence au niveau du boitier 10. Les deux trous agrandis, par exemple oblongs, sont dimensionnés pour permettre un déplacement, généralement de plusieurs millimètres, des vis dans les trous. C'est ce déplacement qui va permettre de modifier la position du capot 8 par rapport au boitier 10, et donc d'ajuster la position finale du capot 8. Une fois le capot 8 dans la position voulue, il suffit alors de serrer les boulons pour fixer le capot 8 sur le boitier 10 de manière pérenne. Par exemple, l'écrou de chaque boulon peut être positionné dans un logement du boitier suffisamment large pour pouvoir se déplacer avec la vis correspondante lors de l'ajustement du capot 8, mais également suffisamment étroit pour empêcher la rotation de l'écrou lors de la rotation de la vis pendant le serrage.

Le moyen de fixation 15 permet donc de définir la position du capot 8 par rapport à l'ouverture d'insertion 6, lorsque la batterie 4 est dans le logement creux 1, ce qui facilite et améliore le positionnement correct du capot 8.

Dans le mode de réalisation illustré, le capot 8 n'est pas ajusté en position selon l'une des directions de l'espace : il s'agit de la direction sensiblement perpendiculaire au plan de la figure 1. Dit autrement, le moyen de fixation 15 ne permet pas d'ajuster la distance entre le capot 8 et le boitier 10 : une telle distance reste constante.

Le positionnement du capot 8 dans le plan du logement creux 1 peut se faire notamment par l'intermédiaire des supports sur lesquels vient se monter la batterie 4 dans le logement creux 1.

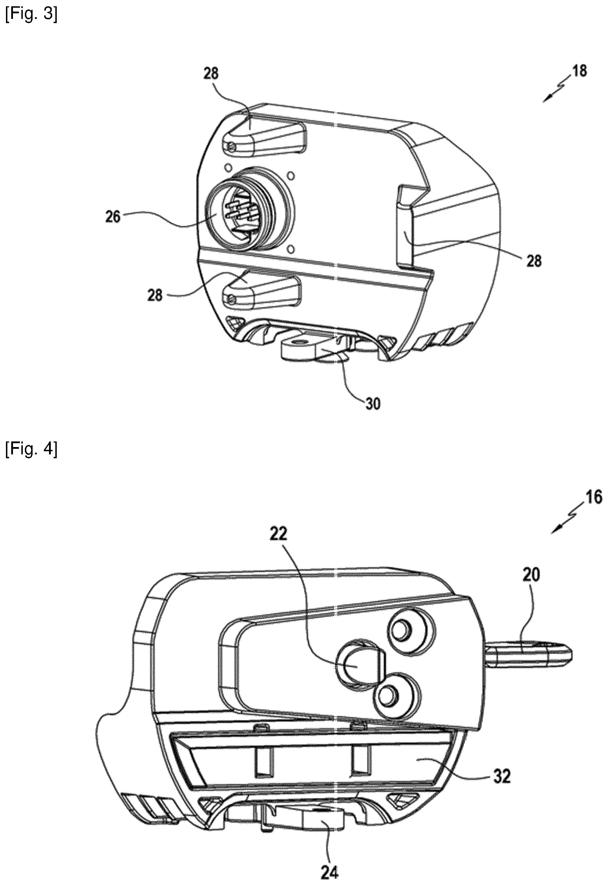

Le logement creux 1 comporte ainsi des moyens de connexion mécaniques et électriques avec le boitier 10, sous la forme de deux parties de support : une première partie de support 16 et une deuxième partie de support 18. Les deux parties de support 16, 18 peuvent être distinctes l'une de l'autre, comme illustré sur les figures 3 et 4, ou bien faire partie d'un seul et même support monobloc. Les parties de support 16, 18 sont notamment configurées pour coopérer avec les extrémités longitudinales 12, 14 du boitier 10 de batterie, afin de permettre une insertion et un retrait faciles et aisés de la batterie 4, notamment pour en permettre la recharge lorsque celle-ci est partiellement ou totalement déchargée.

Lorsque les première et deuxième parties de support 16, 18 sont montées sur une surface sensiblement plane du logement creux 1 qui appartient au plan P' (voir figure 2), le capot 8 peut être configuré pour être ajusté en position au moins selon la direction Y perpendiculaire audit plan P' de ladite surface du logement creux 1. Dans le cas d'un capot 8 plan, le plan P' de la surface du logement creux 1 sur laquelle sont montées les première et deuxième parties de support 16, 18 est alors perpendiculaire au plan P du capot 8.

La première partie de support 16 (voir figure 4) peut ainsi comprendre un moyen de verrouillage 20, par exemple une serrure, pour sécuriser la batterie 4 dans le logement creux 1. Le moyen de verrouillage 20 coopère notamment avec un doigt 22 s'étendant depuis la première partie de support 16 afin de coopérer avec un évidement ou une butée correspondante de la première extrémité longitudinale 12 du boitier 10. La première partie de support 16 peut également comprendre un guide, de forme trapézoïdale, configuré pour coopérer avec un guide de forme complémentaire prévu à la première extrémité longitudinale 12 du boitier, et permettant de faciliter et de guider l'insertion de la batterie 4 dans le logement creux 1.

La première partie de support 16 comporte également des moyens de fixation 24 sur le logement creux 1. De tels moyens de fixation 24 sont notamment prévus pour n'être ajustables que selon une unique direction de l'espace : celle perpendiculaire au plan du capot 8.

A cet effet, et sur l'exemple illustré sur les figures 1 à 4, les deux parties de support 16, 18 sont fixées sur une surface du logement creux 1 qui est perpendiculaire au plan du capot 8, par exemple une surface inférieure sur la figure 1. Ainsi, pour permettre un ajustement du capot 8 selon une direction sensiblement perpendiculaire au plan dans lequel il s'étend, il suffit de prévoir des moyens de fixation 24 configurés pour se translater dans le plan de la surface sur laquelle ils sont fixés, et perpendiculairement à la direction longitudinale du logement creux 1. La première partie de support 16 peut par exemple être montée sur les moyens de fixation 24 par une liaison glissière : la liaison glissière peut être configurée pour permettre un déplacement de la première partie de support 16 selon la direction perpendiculaire au plan du capot 8, et permettre un blocage en position, par exemple par serrage, lorsque le capot 8 est correctement positionné.

Un tel positionnement et serrage de la première partie de support 16 peut également être effectué avec la batterie 4 dans le logement creux 1, depuis l'extérieur du logement creux 1, en prévoyant une vis de montage et serrage de la première partie de support 16 dont la tête est positionnée sur l'extérieure du logement creux 1.

La deuxième partie de support 18 (voir figure 3) peut ainsi comprendre un connecteur électrique 26, ainsi que des pattes de guidage 28 pour l'insertion et le retrait de la batterie 4 dans le logement creux 1. Les pattes de guidage 28 peuvent notamment coopérer avec des évidements correspondants dans le boitier 10.

La deuxième partie de support 18 comporte également des moyens de fixation 30 sur le logement creux 1. Comme pour les moyens de fixation 24 de la première partie de support 16, de tels moyens de fixation 30 sont notamment prévus pour n'être ajustables que selon une unique direction de l'espace : celle perpendiculaire au plan du capot 8.

A cet effet, les moyens de fixation 30 sont configurés pour se translater dans le plan de la surface sur laquelle ils sont fixés, et perpendiculairement à la direction longitudinale du logement creux 1. La deuxième partie de support 18 peut par exemple être montée sur les moyens de fixation 30 par une liaison glissière : la liaison glissière peut être configurée pour permettre un déplacement de la deuxième partie de support 18 selon la direction perpendiculaire au plan du capot 8, et permettre un blocage en position, par exemple par serrage, lorsque le capot 8 est correctement positionné.

Un tel positionnement et serrage de la deuxième partie de support 18 peut également être effectué avec la batterie 4 dans le logement creux 1, depuis l'extérieur du logement creux 1, en prévoyant une vis de montage et serrage de la deuxième partie de support 18 dont la tête est positionnée sur l'extérieure du logement creux 1.

Afin de permettre un maintien serré de la batterie dans le logement creux 1, les parties de support 16, 18 sont également configurées pour appliquer une force longitudinale sur le boitier 10 de la batterie 4. Ainsi, la première partie de support 16 peut comprendre un moyen de serrage longitudinal 32, par exemple sous la forme d'un patin. Le patin est monté sur une face de la première partie de support 16 qui est sensiblement perpendiculaire à la direction longitudinale. Le patin peut présenter des propriétés élastiques et/ou être monté sur des moyens élastiques (non représentés) tels que : une lame ressort ou bien des ressorts hélicoïdaux. Le patin permet d'exercer une force sur la première extrémité 12 du boitier 10, perpendiculaire à ladite première extrémité 12.

Le patin permet notamment de maintenir la batterie serrée et immobile par rapport au logement creux 1, notamment en cours d'utilisation durant laquelle le véhicule électrique 2 peut subir des vibrations et/ou des à-coups brutaux.

De manière avantageuse, le patin est positionné du côté des moyens de fixation 24 de la première partie de support 16, de manière à diminuer les efforts de torsion pouvant apparaître sur la distance séparant le patin des moyens de fixation 24. La contrainte longitudinale entre le boitier 10 et les supports 16, 18 est alors directement reprise par les moyens de fixation 24, 30, et donc par le logement creux 1 lui-même.

Alternativement, le moyen de serrage longitudinal peut être positionné sur le boitier 10 de batterie, à l'une des extrémités longitudinales 12, 14.

Ainsi, une telle géométrie permet de limiter les contraintes de torsion pouvant s'exercer sur les parties de support 16, 18. Il est alors possible de réaliser lesdites parties de support 16, 18 en matériau plus légers et moins chers à fabriquer. Par exemple, les parties de support 16, 18 peuvent être fabriquées en plastique, de préférence en plastique injecté. On obtient alors des pièces peu couteuses et plus légères, tout en ayant des propriétés mécaniques adaptées aux contraintes exercées en utilisation.

Pour monter le système de batterie dans le véhicule électrique 2, il suffit alors de monter et de fixer les deux parties de support 16, 18 dans le logement creux 1. Avantageusement, le positionnement des deux parties de support 16, 18, avant serrage, s'effectue à l'aide d'un gabarit définissant précisément la distance entre les deux parties de support 16, 18, mais également leur position dans le logement creux 1. Par ailleurs, un tel gabarit peut également être configuré pour positionner les deux parties de support 16, 18 par rapport à l'ouverture d'insertion 6, par exemple en prévoyant, sur le gabarit, des surfaces de coopération avec l'ouverture d'insertion 6. Dans ce cas, le bon positionnement du gabarit par rapport à l'ouverture d'insertion 6 permet de positionner correctement les deux parties de support 16, 18.

Une fois les deux parties de support 16, 18 correctement positionnées dans le logement creux 1, la batterie 4 peut être montée dessus, afin de permettre le réglage en profondeur de celle-ci grâce à l'ajustement des moyens de fixation 24, 30 des parties de support 16, 18. Un tel ajustement permet alors de positionner le capot dans la continuité de la paroi du logement creux 1. Puis le capot 8 est positionné par rapport aux bords de l'ouverture d'insertion 6.

Le positionnement peut se faire à l'œil ou bien à l'aide d'un outil 34 illustré à la figure 6 et comportant un corps 36 sur la périphérie duquel sont disposées des entretoises 38. Les entretoises 38 sont positionnées de manière à venir se placer entre le capot 8 et l'ouverture d'insertion 6. Selon l'écart existant entre le capot 8 et l'ouverture d'insertion 6, les entretoises 38 viennent plus ou moins s'introduire dans l'espace intercalaire, jusqu'à ce que ledit espace intercalaire soit le même sur tout le pourtour du capot 8.

Il ne suffit plus ensuite qu'à serrer le moyen de fixation 15 pour bloquer le capot 8 en position.

Ainsi, grâce au système selon la présente invention, il devient plus aisé d'intégrer de manière discrète et esthétique une batterie à l'intérieur d'un cadre de véhicule électrique. En particulier, il devient aisé d'ajuster la position du capot par rapport au reste du cadre, pour obtenir un effet esthétique et un effet de protection voulus.

## Revendications

1. Vélo électrique (2) comportant :
- un logement creux (1) avec une ouverture d'insertion (6) d'une batterie,
- une batterie (4) comportant un boitier (10) s'étendant selon une direction longitudinale (X), entre deux extrémités longitudinales (12, 14), et, le long d'un côté longitudinal du boitier (10), un capot (8), par exemple de dimensions inférieures aux dimensions de l'ouverture d'insertion (6), et
- un support (16, 18) de batterie monté à l'intérieur du logement creux (1), de manière à permettre l'installation ou le retrait de la batterie (4) sur le support (16, 18), à travers l'ouverture d'insertion (6), le support comportant deux parties (16, 18) configurées pour coopérer avec les deux extrémités longitudinales (12, 14) du boitier (10) de la batterie,
dans lequel,
selon deux directions de l'espace, à savoir selon la direction longitudinale (X) du boitier et selon une direction (Y) transversale à la direction longitudinale (X) du boitier, les deux parties de support (16, 18) sont montées de manière fixe, non-réglable, par rapport au logement creux (1),
**caractérisé en ce que** le capot (8) est monté de manière réglable sur le boitier (10) de batterie selon lesdites deux directions de l'espace.

2. Vélo électrique (2) selon la revendication 1, dans lequel les deux parties du support (16, 18) et/ou le boitier (10) de batterie sont configurés pour exercer une contrainte longitudinale de serrage entre le boitier (10) de batterie et le support (16, 18), de préférence au niveau de la fixation (24) d'au moins une des deux parties du support (16) sur l'intérieur du logement creux (1).

3. Vélo électrique (2) selon la revendication 1 ou 2, dans lequel la batterie (4) comporte des moyens de fixation (15) du capot (8) sur le boitier (10), lesdits moyens de fixation (15) comportant un système de serrage, par exemple un ensemble vis-écrou, monté avec du jeu dans une ouverture du boitier (10), par exemple une ouverture oblongue dont les dimensions sont inférieures à celles de l'écrou mais supérieures à celles de la vis.

4. Vélo électrique (2) selon la revendication 1, 2 ou 3, dans lequel une des parties du support (16) comprend un moyen de serrage longitudinal (32), par exemple un patin monté, selon la direction longitudinale du boitier (10) de batterie, sur un moyen élastique.

5. Vélo électrique (2) selon l'une quelconque des revendications précédentes, dans lequel le capot (8) est sensiblement plan et s'étend selon lesdites deux directions de l'espace de réglage du capot, à savoir la direction longitudinale du boitier et la direction transversale à la direction longitudinale du boitier.

6. Vélo électrique (2) selon l'une quelconque des revendications précédentes, dans lequel au moins une des deux parties du support (16, 18) de batterie est fabriquée en plastique, de préférence en plastique injecté.

7. Procédé de montage d'un support (16, 18) pour batterie (4) et d'une batterie (4) à l'intérieur d'un logement creux (1) de vélo électrique (2) avec une ouverture d'insertion (6), la batterie (4) comportant :
- un boitier (10) s'étendant selon une direction longitudinale (X), entre deux extrémités longitudinales (12, 14), et,
- le long d'un côté longitudinal du boitier, un capot (8), par exemple de dimensions inférieures aux dimensions de l'ouverture d'insertion (6),
et le support de batterie comportant deux parties (16, 18), de préférence en plastique, configurées pour coopérer avec les deux extrémités longitudinales (12, 14) du boitier (10) de la batterie,
dans lequel:
- on fixe, de manière non-réglable selon deux directions de l'espace, à savoir selon la direction longitudinale (X) du boitier et selon une direction (Y) transversale à la direction longitudinale (X) du boitier, les deux parties du support (16, 18) à l'intérieur du logement creux (1) de vélo électrique (2),
- on installe la batterie (4) sur le support (16, 18), à l'intérieur du logement creux (1) de vélo électrique, et
- on règle, selon lesdites deux directions de l'espace, la position du capot (8) sur le boitier (10) de batterie par rapport à l'ouverture d'insertion (6) du logement creux, de préférence de manière centrée.

8. Procédé de montage selon la revendication précédente, dans lequel, lorsque la batterie (4) est installée sur le support, on exerce une contrainte longitudinale entre les deux parties du support (16, 18) et la batterie (4), de préférence au niveau de la fixation (24) d'au moins une des deux parties (16) du support sur l'intérieur du logement creux.

9. Procédé de montage selon la revendication 7 ou 8, dans lequel les deux parties du support (16, 18) sont fixées sur le logement creux (1) à l'aide d'un gabarit.

10. Procédé de montage selon la revendication 7, 8 ou 9, dans lequel on règle la position du capot (8) sur le boitier (10) de batterie à l'aide d'un ensemble d'entretoises périphériques (38), de préférence en forme de V, venant se positionner, simultanément, entre les différents côtés du capot (8) et l'ouverture d'insertion (6) lorsqu'on règle la position du capot.

## Patentansprüche

1. Elektrofahrrad (2), umfassend:
- einen Hohlraum (1) mit einer Einsetzöffnung (6) für eine Batterie,
- eine Batterie (4), die ein Gehäuse (10) umfasst, das sich gemäß einer Längsrichtung (X) zwischen zwei Längsenden (12, 14) erstreckt, und entlang einer Längsseite des Gehäuses (10) eine Abdeckung (8), beispielsweise mit Abmessungen, die kleiner als die Abmessungen der Einsetzöffnung (6) sind, und
- einen Batteriehalter (16, 18), der im Inneren des Hohlraums (1) angebracht ist, so dass das Aufsetzen oder das Entnehmen der Batterie (4) auf den beziehungsweise von dem Halter (16, 18) durch die Einsetzöffnung (6) hindurch ermöglicht wird, wobei der Halter zwei Teile (16, 18) aufweist, die dafür ausgelegt sind, mit den beiden Längsenden (12, 14) des Gehäuses (10) der Batterie zusammenzuwirken,
wobei gemäß zwei Raumrichtungen, nämlich gemäß der Längsrichtung (X) des Gehäuses und gemäß einer Richtung (Y), die quer zu der Längsrichtung (X) des Gehäuses ist, die beiden Halterteile (16, 18) relativ zu dem Hohlraum (1) fest, nicht einstellbar angebracht sind,
**dadurch gekennzeichnet, dass** die Abdeckung (8) auf dem Batteriegehäuse (10) gemäß den zwei Raumrichtungen einstellbar angebracht ist.

2. Elektrofahrrad (2) nach Anspruch 1, wobei die beiden Teile des Halters (16, 18) und/oder das Batteriegehäuse (10) dafür ausgelegt sind, eine longitudinale Spannkraft zwischen dem Batteriegehäuse (10) und dem Halter (16, 18) auszuüben, vorzugsweise im Bereich der Befestigung (24) von mindestens einem der beiden Teile des Halters (16) im Inneren des Hohlraums (1).

3. Elektrofahrrad (2) nach Anspruch 1 oder 2, wobei die Batterie (4) Mittel (15) zum Befestigen der Abdeckung (8) an dem Gehäuse (10) umfasst, wobei die Befestigungsmittel (15) ein Spannsystem umfassen, beispielsweise eine Schraube-MutterAnordnung, die mit Spiel in einer Öffnung des Gehäuses (10) angebracht ist, beispielsweise einer Langlochöffnung, deren Abmessungen kleiner als diejenigen der Mutter, aber größer als diejenigen der Schraube sind.

4. Elektrofahrrad (2) nach Anspruch 1, 2 oder 3, wobei eines der Teile des Halters (16) ein longitudinales Spannmittel (32) umfasst, beispielsweise einen Klotz, der gemäß der Längsrichtung des Batteriegehäuses (10) auf einem elastischen Mittel angebracht ist.

5. Elektrofahrrad (2) nach einem der vorhergehenden Ansprüche, wobei die Abdeckung (8) im Wesentlichen eben ist und sich gemäß den zwei Raumrichtungen der Einstellung der Abdeckung erstreckt, nämlich der Längsrichtung des Gehäuses und der Richtung quer zur Längsrichtung des Gehäuses.

6. Elektrofahrrad (2) nach einem der vorhergehenden Ansprüche, wobei mindestens eines der beiden Teile des Batteriehalters (16, 18) aus Kunststoff hergestellt ist, vorzugsweise aus Spritzkunststoff.

7. Verfahren zum Anbringen eines Halters (16, 18) für eine Batterie (4) und einer Batterie (4) im Inneren eines Hohlraums (1) eines Elektrofahrrads (2) mit einer Einsetzöffnung (6), wobei die Batterie (4) aufweist:
- ein Gehäuse (10), das sich gemäß einer Längsrichtung (X) zwischen zwei Längsenden (12, 14) erstreckt, und
- entlang einer Längsseite des Gehäuses eine Abdeckung (8), beispielsweise mit Abmessungen, die kleiner als die Abmessungen der Einsetzöffnung (6), sind,
und wobei der Batteriehalter zwei Teile (16, 18), vorzugsweise aus Kunststoff, aufweist, die dafür ausgelegt sind, mit den beiden Längsenden (12, 14) des Batteriegehäuses (10) zusammenzuwirken, wobei:
- die beiden Teile des Halters (16, 18) im Inneren des Hohlraums (1) des Elektrofahrrads (2) gemäß zwei Raumrichtungen, nämlich gemäß der Längsrichtung (X) des Gehäuses und gemäß einer Richtung (Y), die quer zur Längsrichtung (X) des Gehäuses ist, nicht einstellbar befestigt werden,
- die Batterie (4) auf den Halter (16, 18) im Inneren des Hohlraums (1) des Elektrofahrrads gesetzt wird, und
- die Position der Abdeckung (8) auf dem Batteriegehäuse (10) relativ zu der Einsetzöffnung (6) des Hohlraums gemäß den zwei Raumrichtungen vorzugsweise zentriert eingestellt wird.

8. Montageverfahren nach vorhergehendem Anspruch, wobei, wenn die Batterie (4) auf den Halter gesetzt ist, zwischen den beiden Teilen des Halters (16, 18) und der Batterie (4), vorzugsweise im Bereich der Befestigung (24) von mindestens einem der beiden Teile (16) des Halters im Inneren des Hohlraums, eine longitudinale Spannkraft ausgeübt wird.

9. Montageverfahren nach Anspruch 7 oder 8, wobei die beiden Teile des Halters (16, 18) mithilfe einer Schablone an dem Hohlraum (1) befestigt werden.

10. Montageverfahren nach Anspruch 7, 8 oder 9, wobei die Position der Abdeckung (8) auf dem Batteriegehäuse (10) mithilfe einer Anordnung von peripheren, vorzugsweise V-förmigen Distanzstücken (38) eingestellt wird, die sich gleichzeitig zwischen den verschiedenen Seiten der Abdeckung (8) und der Einsetzöffnung (6) positionieren, wenn die Position der Abdeckung eingestellt wird.

## Claims

1. An electric bicycle (2) including:
- a hollow housing (1) with an opening (6) for inserting a battery,
- a battery (4) including a box (10) extending along a longitudinal direction (X), between two longitudinal ends (12, 14) and, along a longitudinal side of the box (10), a cover (8), for example of dimensions smaller than the dimensions of the insertion opening (6), and
- a battery support (16, 18) mounted inside the hollow housing (1), so as to allow the installation or withdrawal of the battery (4) on the support (16, 18), through the insertion opening (6), the support including two parts (16, 18) configured to cooperate with the two longitudinal ends (12, 14) of the battery box (10),
wherein, along two spatial direction, namely along the longitudinal direction (X) of the box and along a direction (Y) transverse to the longitudinal direction (X) of the box, the two support parts (16, 18) are mounted in a fixed and non-adjustable manner relative to the hollow housing (1), **characterized in that** the cover (8) is mounted in an adjustable manner on the battery box (10) along said two spatial directions.

2. The electric bicycle (2) according to claim 1, wherein the two parts of the support (16, 18) and/or the battery box (10) are configured to exert a longitudinal tightening stress between the battery box (10) and the support (16, 18), preferably at the level of the fixing (24) of at least one of the two parts of the support (16) on the inside of the hollow housing (1).

3. The electric bicycle (2) according to claim 1 or 2, wherein the battery (4) includes means (15) for fixing the cover (8) to the box (10), said fixing means (15) including a tightening system, for example a screw-nut assembly, mounted with clearance in an opening of the box (10), for example an oblong opening whose dimensions are smaller than those of the nut but greater than those of the screw.

4. The electric bicycle (2) according to claim 1, 2 or 3, wherein one of the parts of the support (16) comprises a longitudinal tightening means (32), for example a pad mounted, along the longitudinal direction of the battery box (10), on an elastic means.

5. The electric bicycle (2) according to any one of the preceding claims, wherein the cover (8) is substantially planar and extends along said two spatial directions of adjustment of the cover, namely the longitudinal direction of the box and a direction transverse to the longitudinal direction of the box.

6. The electric bicycle (2) according to any one of the preceding claims, wherein at least one of the two parts of the battery support (16, 18) is made of plastic, preferably of injected plastic.

7. A method for mounting a battery (4) support (16, 18) and a battery (4) inside a hollow housing (1) of an electric bicycle (2) with an insertion opening (6), the battery (4) including:
- a box (10) extending along a longitudinal direction (X), between two longitudinal ends (12, 14), and,
- along a longitudinal side of the box, a cover (8), for example of dimensions smaller than the dimensions of the insertion opening (6),
and the battery support including two parts (16, 18), preferably made of plastic, configured to cooperate with the two longitudinal ends (12, 14) of the battery box (10),
wherein:
- the two parts of the support (16, 18) are fixed inside the hollow housing (1) of an electric bicycle (2) in a non-adjustable manner along two spatial directions, namely along the longitudinal direction (X) of the box and along a direction (Y) transverse to the longitudinal direction (X) of the box,
- the battery (4) is installed on the support (16, 18), inside the hollow housing (1) of the electric bicycle, and
- the position of the cover (8) is adjusted along said two spatial directions on the battery box (10) relative to the insertion opening (6) of the hollow housing, preferably in a centered manner.

8. The mounting method according to the preceding claim, wherein, when the battery (4) is installed on the support, a longitudinal stress is exerted between the two parts of the support (16, 18) and the battery (4), preferably at the level of the fixing (24) of at least one of the two parts (16) of the support on the inside of the hollow housing.

9. The mounting method according to claim 7 or 8, wherein the two parts of the support (16, 18) are fixed on the hollow housing (1) using a template.

10. The mounting method according to claim 7, 8 or 9, wherein the position of the cover (8) is adjusted on the battery box (10) using a set of preferably V-shaped peripheral spacers (38) simultaneously positioned between the different sides of the cover (8) and the insertion opening (6) when adjusting the position of the cover.
